# EUROPEAN PATENT SPECIFICATION

(11) **EP 0 744 585 B1**
(45) Date of publication and mention of the grant of the patent: **04.12.2002**
(21) Application number: 96108333.4
(22) Date of filing: 24.05.1996
(51) Int. Cl.: F27D 13/00, C21C 5/56

(54) **Method for preheating scrap by reheating the exhaust gases, and device for performing the method**
Verfahren zur Vorwärmen von Schrott durch Wiederaufheizung von Rauchgasen sowie Vorrichtung zum Durchführen des Verfahrens
Procédé pour le préchauffage de ferraille par le réchauffage des gas d'échappement et dispositif pour la mise en oeuvre de ladite procédé

(30) Priority: 24.05.1995 CH 153495
(43) Date of publication of application: 27.11.1996
(73) Proprietor: ELTI S.r.l., 24060 Sovere (Bergamo) (IT)
(72) Inventor: Burgherr, Peter, Biasca (CH)
(74) Representative: Modiano, Guido, Dr.-Ing.

(56) References cited:
- EP-A- 0 190 313
- EP-A- 0 219 824
- EP-A- 0 592 723
- GB-A- 2 083 181
- STEEL TIMES - INCORPORATING IRON & STEEL, vol. 221, no. 5, 1 May 1993, page 221, 223 XP000365104 VALLOMY J A ET AL: "THE CONSTEEL PROCESS: AN INTEGRAL SCRAP PREHEATER FOR THE EAF"

## Description

The present invention relates to a device for preheating scrap by reheating the exhaust gases according to the preamble of claim 1 and to a method according to the preamble of claim 3 of the present invention.

Conventional method and device that correspond to the present invention are described in EP-C-0190313 and are marketed by the U.S. company Triple/s Dynamics Inc., headquartered in Dallas (Texas), U.S.A., under the term "Consteel process", to which we will refer hereinafter.

The Consteel process, of which the present invention is an improvement, substantially comprises a sequence of operations described in the preamble of claim 1 of the present invention, whose purpose is to melt in an electric arc melting furnace and in a continuous manner -- i.e., continuously feeding the material into the furnace and likewise more or less continuously extracting molten metal from the furnace -- "contaminated" scrap, i.e., scrap that even contains nonmetallic compounds (particularly volatile combustible substances). The process also seeks to eliminate or reduce the amount of pollutants emitted by the plant and to use the energy-producing potential contained in the exhaust gases of the furnace and in the volatile substances to preheat the fed scrap.

The term "exhaust gases" references the entire gas mixture that develops in the furnace during combustion but also during preheating in the feeder channel by volatilization for example of the volatile substances that are entrained by the scrap and contaminate it.

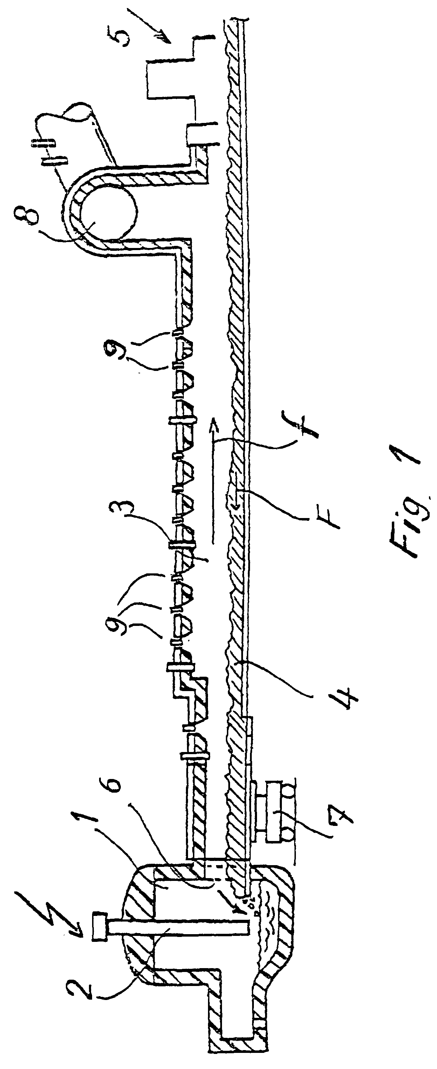

The Consteel plant is composed, as described in greater detail in figure 1, which illustrates the prior art, of an electric arc furnace into which a scrap feeder channel leads; said channel is usually provided as a vibrating channel. An exhaust gas aspirator duct leads into said channel near the inlet end thereof; scrap feeding usually occurs "by successive charges" and therefore by relatively uneven charges; by means of said duct, the exhaust gases that arrive from the melting furnace and have a high temperature, after passing through or skimming over the scrap that moves in counter-current in the channel, are removed from the channel and are treated to eliminate any dioxins and other pollutants that they may contain and to filter them before transferring them to the outside environment.

The most important part of the Consteel plant is the scrap feeder channel in which the ferrous material (pig iron or scrap) is preheated, with a consequent recovery of heat, since the scrap then enters the furnace already at a high temperature (approximately 600° are desirable).

A so-called dynamic sealing system is also arranged between the outlet point of the exhaust gas aspirator duct and the scrap loading end (i.e., the beginning of the channel); its purpose is to aerodynamically separate the part of the channel assigned to the preheating of the scrap, which thus acts as a heat exchanger, from the part of the channel that is open onto the outside environment, so that the exhaust gas aspirator system cannot aspirate too much ambient air. This unit therefore has no role within the scope of the present invention and is therefore ignored.

The exchange of heat between the exhaust gases and the scrap of the feeder channel, in order to achieve preheating, occurs in two different ways:
-- by exchanging the sensible heat of the exhaust gases at high temperature with the scrap, which is at a lower temperature. The high temperature of the exhaust gases that arrive from the furnace is due to the energy addition provided by the electrodes of the furnace in the form of electricity and by the combustion of some compounds in the liquid metal bath (C, Si, S, Mn...).
-- by exchanging the heat generated by the combustion of the combustible fraction contained in the exhaust gases. This fraction is mainly composed of the carbon monoxide CO that is generated by the partial combustion of the carbon that is present in the furnace (carbon injected in the form of coal, carbon in the scrap and in the pig iron, carbon of the electrodes).

Another contribution to the heating of the scrap is provided by the volatile fraction that is initially contained in the scrap. During heating, the volatile fraction becomes gaseous and is thus available to provide further energy by combustion.

In order to burn the carbon monoxide CO that originates from the furnace and the volatile compounds that are contained in the scrap, the necessary amount of comburent (usually air) must be available. The air is supplied by means of a series of injectors or nozzles that are arranged along the entire length of the channel, with their axis arranged at right angles to the flow of the exhaust gases. In the Consteel plant (see again figure 1, which indeed illustrates the prior art), the comburent air for exhaust gas combustion is fed into the scrap feeder channel by means of a series of air injection nozzles located in the upper part of the channel and distributed along the entire "useful" length of said channel, where the term "useful length" references the part of the channel (between the melting furnace and the exhaust gas aspirator duct) in which heat exchange between the exhaust gases and the scrap should occur. This concept fully fails to take into account the flame's rate, i.e., the rate at which the front of the flame propagates in a gas current. This rate increases as the turbulence of the gas increases but is subjected to limitations. Diffusion rates are particularly low when, as in our case, one is dealing with diffusion flames, i.e., flames in which gas and air are in contact only at the time of combustion. In this case, with laminar flow conditions and by using CO as combustible substance, the maximum flame propagation rate in a channel is 0.5 m/s. Since the gas flow rates that occur in the preheating channel of the prior art are, as shown by experience, around 10 m/s, it is evident that if this flow has a laminar nature the flame is entrained toward the end of the channel where the opening of the exhaust gas aspirator duct is located, so that combustion then occurs either in said final region of the channel or even in the exhaust gas aspirator duct, where it is no longer useful to preheat the scrap. This is indeed what happens in practice, since the comburent air feeder nozzles distributed along the feeder channel are unable to produce, in the flow of exhaust gases that travels along the channel and contains the combustion CO, the turbulences that are necessary to achieve the formation of the flame along the entire channel.

EP-A-0 592 723 discloses all the features of the preamble of claims 1 and 3.

The aim of the present invention is to ensure, in a plant having the basic characteristics of the plant described in EP-C-0190313 and executed as a Consteel plant in practice, the formation of a flame along the entire melting furnace and the exhaust gas aspirator duct) in which heat exchange between the exhaust gases and the scrap should occur. This concept fully fails to take into account the flame's rate, i.e., the rate at which the front of the flame propagates in a gas current. This rate increases as the turbulence of the gas increases but is subjected to limitations. Diffusion rates are particularly low when, as in our case, one is dealing with diffusion flames, i.e., flames in which gas and air are in contact only at the time of combustion. In this case, with laminar flow conditions and by using CO as combustible substance, the maximum flame propagation rate in a channel is 0.5 m/s. Since the gas flow rates that occur in the preheating channel of the prior art are, as shown by experience, around 10 m/s, it is evident that if this flow has a laminar nature the flame is entrained toward the end of the channel where the opening of the exhaust gas aspirator duct is located, so that combustion then occurs either in said final region of the channel or even in the exhaust gas aspirator duct, where it is no longer useful to preheat the scrap. This is indeed what happens in practice, since the comburent air feeder nozzles distributed along the feeder channel are unable to produce, in the flow of exhaust gases that travels along the channel and contains the combustion CO, the turbulences that are necessary to achieve the formation of the flame along the entire channel.

The aim of the present invention is to ensure, in a plant having the basic characteristics of the plant described in EP-C-0190313 and executed as a Consteel plant in practice, the formation of a flame along the entire length of the scrap feeder channel that lies between the furnace and the exhaust gas aspirator duct, so as to provide better heat exchange between the exhaust gases and the scrap and achieve higher furnace entry temperatures of the scrap.

An object of the invention is to eliminate the danger, which is intrinsic in the solution of the prior art, of the combustion of the exhaust gases in the aspirator duct, which causes the intense and useless heating of said duct.

An object of the present invention is to provide a method which allows to increase the degree of efficiency of the scrap preheating system; the aim is also achieved with a constructive simplification of the plant that is interesting from the point of view of its production and maintenance costs.

This aim and this object are achieved with a device characterized by claim 1 and with a method characterized by claim 3 of the present invention.

The method susbstantially entails that in order to control the combustion of the carbon monoxide CO and of any other volatile compounds contained in the exhaust gases along the feeder channel, one acts on the propagation of the flame along the scrap feeder channel. The corresponding device for performing the method correspondingly provides for the presence of combustion air feeder nozzles arranged in the scrap feeder channel near the melting furnace, where said nozzles then direct their controlled jet of air so as to increase the rate of propagation of the flame along the scrap feeder channel. The main teaching of the invention is therefore that it is not sufficient to believe, as clearly occurs in the known concept of the prior art, that the CO combustion flame forms wherever one feeds air. This concept has indeed led to the idea, which has been proved incorrect, of distributing the supply of air along the entire scrap feeder channel. However, since it does not take at all into account the flame propagation rate in a gas stream, this distribution of the fuel along the channel indeed produces the above-described delayed combustion effect. According to the invention, instead, it is necessary to supply the comburent air so as to ensure a high propagation rate of the flame (or of the front of the flame, to be more precise); this is in fact the only way to achieve the formation of a flame along the entire channel. This is the teaching of the present invention, which will now be described with the aid of an example of embodiment after illustrating, by way of comparison, the conventional system of the prior art.

For this purpose we will use some figures, in which:
-- figure 1 is a simplified general elevation view of a scrap melting plant with preheating of the scrap fed continuously into the melting furnace, which corresponds to the prior art;
-- figure 2 is a schematic view of the feeding of the combustion air along the channel for conveying the scrap into the plant according to the prior art of figure 1;
-- figure 3 is a general elevation view of a scrap melting plant with preheating of the scrap fed continuously into a melting furnace, according to the invention;
-- figure 4 is a schematic view of the feeding of the combustion air along the channel for conveying the scrap into the plant according to the invention, shown in figure 3.

Figure 1 illustrates a Consteel plant, which constitutes the prior art of the present invention.

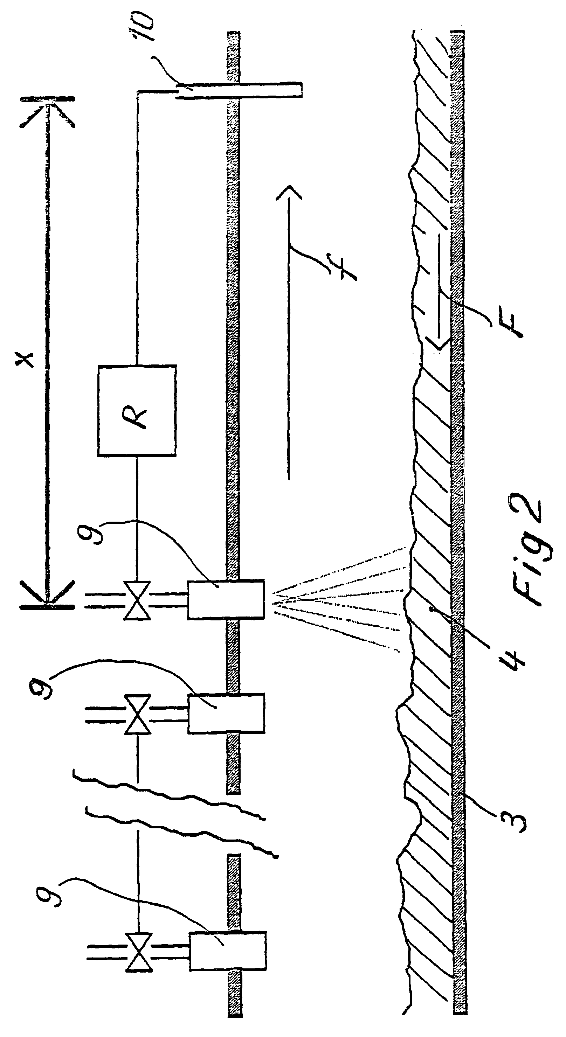

In said figure, the reference numeral 1 designates the melting furnace, which is heated electrically by an arc by means of the electrode 2. A scrap conveyor and feeder channel 3 leads laterally into the furnace and is hereinafter always referenced simply as feeder channel. The feeder channel 3 conveys the scrap 4, shown in figures 1 and 2 as a pile of variable scrap material that moves in the channel along the direction of the arrow F, from an inlet end or charging point 5 to an output end 6 that leads directly into the melting furnace 1. The scrap is usually conveyed in the feeder channel 3 by means of a vibration conveyance system, which is capable of withstanding, better than other systems, the high temperatures to which the scrap to be melted is heated; however, the conveyance system, provided that it offers continuous conveyance, has no significant role within the scope of the present invention and therefore is not described further hereinafter.

At the end where the feeder channel 3 connects to the furnace 1, the bottom of the channel 3 is mounted on a truck 7 whose purpose is to make the scrap fall in the middle of the furnace 1, where the liquified metal cup is located. However, this constructive characteristic of the plant, too, is not essential for the purposes of the present invention.

An exhaust gas aspirator duct 8 provided with aspirator means and filtering means (both not shown) ends in the feeder channel 3 near the inlet end 5 of said feeder channel 3. The aspirator duct 8 aspirates the exhaust gases produced by the melting furnace 1 and those that form due to the volatilization of the volatile substances contained in the scrap, and returns them to the atmosphere after adapted treatment. The exhaust gases travel through the feeder channel 3 in the direction indicated by the arrow f, i.e., in countercurrent with respect to the travel direction of the scrap 4, indicated by the arrow F. When they encounter the scrap 4, which is colder, the exhaust gases transfer part of their heat to said scrap, preheating it. what one wishes to obtain in the channel 3, however, is not just the exchange of the sensible heat of the exhaust gases at high temperature with the scrap at a lower temperature, but also the exchange of the heat generated by the combustion of the combustible fraction, mainly composed of carbon monoxide CO, that is contained in the exhaust gases. This carbon monoxide arises from the partial combustion of the carbon that is present in the furnace 1, which is injected in the form of coal or is present in the scrap or in the electrodes of the furnace. Another contribution to the heating of the scrap 4 is given, as mentioned, by the volatile fraction contained in the scrap, which becomes gaseous upon heating and can thus provide another useful source of energy for preheating the scrap 4.

In order to burn these combustible substances that are present in the feeder channel 3 one must have the necessary amount of comburent (for example air). In the solution according to the prior art shown in figure 1, the air is currently supplied by means of a series of injection nozzles 9 arranged along the entire length of the channel 3. The nozzles 9 are furthermore arranged so that their axis is perpendicular to the direction f of the flow of the exhaust gases. The number and position of the active injection nozzles 9 are managed starting from the analysis of the oxygen content of the exhaust gases at the end of the preheating operation, i.e., where the exhaust gases leave the channel 3 to enter the exhaust gas aspirator duct 8.

This arrangement of the injection nozzles 9 for the combustion air along the feeder channel 3, which does not take the flame propagation rate into account, has now proved to be, since as shown by experience, in the first part of the feeder channel 3, in the exhaust gas travel direction f, i.e., in the part that is closest to the furnace 1, the flame is unable to stay in place, since the speed of the exhaust gases is higher than its propagation rate (also known as combustion reaction rate). As a consequence of this, the flame forms only when it is too late, i.e., when the exhaust gases are already near the exhaust gas aspirator duct 8. Consequently, the combustion flame no longer makes contact with the scrap and cannot therefore preheat said scrap conveniently. Indeed, the temperature that the scrap 4 reaches in such a plant, after traveling through the entire feeder channel 3 for the scrap 4, before falling into the furnace 1, is only approximately 400°C, whereas the size of the plant and the available energy should allow to reach temperatures of 600° and more if heat exchange could occur correctly.

Moreover, another disadvantage of the known concept of the prior art is linked to the management of the injection of comburent, which occurs by detecting the oxygen content at the inlet 5 of the feeder channel 3.

Figure 2 schematically shows the regulator elements used in the plant according to the prior art; the reference numeral 9 designates the injection nozzles distributed along the channel 3 and the reference numeral 10 designates an oxygen sensor that is arranged near the inlet end 5 of the feeder channel 3. R is the logic unit for regulating the injection nozzles 9.

This type of management is intrinsically inconsistent and slow, since the volume of exhaust gases on which the oxygen content is analyzed and the volume of exhaust gases in which the comburent is injected are different. Bearing in mind the periodically variable nature of the composition of the gas that arrives from the furnace 1, along the preheating feeder channel 3 there is a gas mix in which the CO and O2 contents are highly variable. For example, if a gas mix that is poor in O2 is present in the region surrounding the oxygen sensor 10, the system for the management of the injection nozzles 9 acts by increasing the flow-rate of the injected air. Since the sensor 10 and the injection nozzles 9 are in two different positions, which are separated even by several meters, at the time when there is a lack of 02 in the analysis region there may be an excess of O2 in the region of the injection nozzles 9. The action of the regulator R, besides being ineffective, achieves the opposite result with respect to the desired one.

The reheating regulator R already has an implicit delay, which is expressed numerically by X divided by the speed of the gas stream, to which the delay of the probe 10 and of the regulator R of the injection nozzles 9 must then be added.

Due to its intrinsic concept, this type of regulation cycle is therefore unable to deal effectively with the continuous and sudden variations in the composition of the exhaust gases, since it is forced to have very long response times, i.e., times that do not match the needs of the process, moreover supposing that the O2 content alone is sufficient to manage the described process.

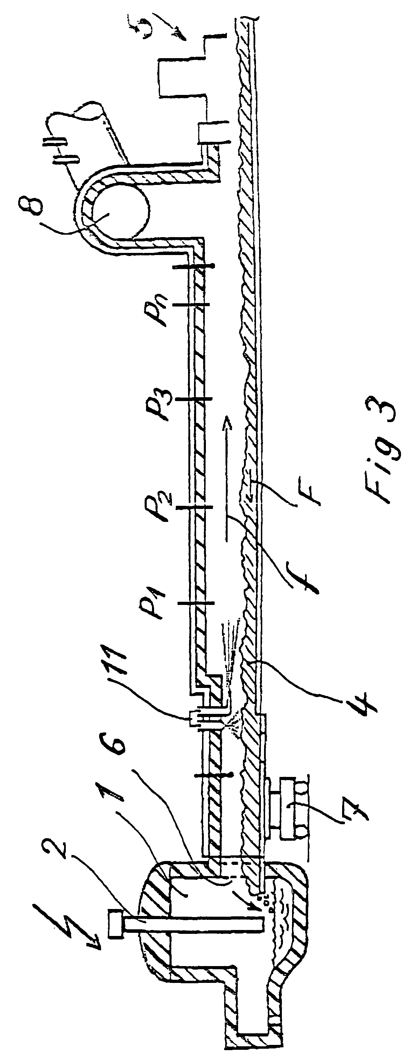

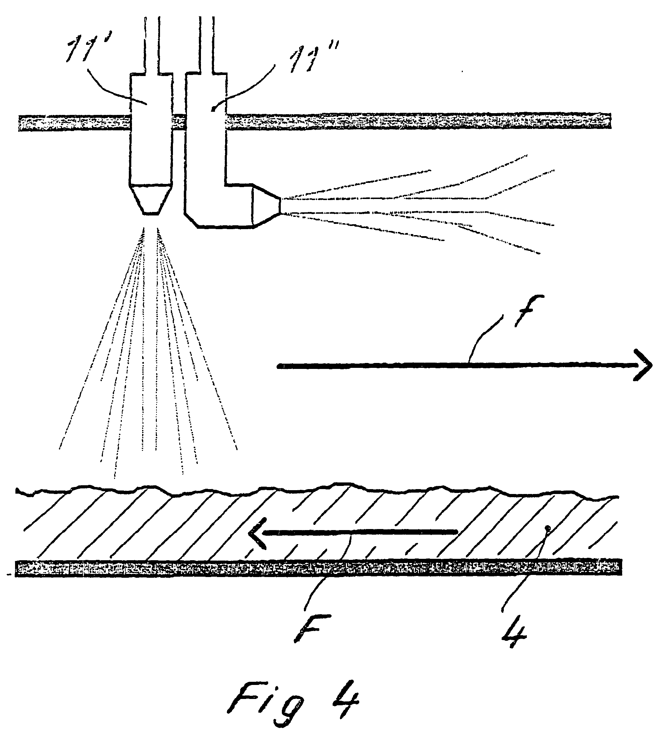

The method and the device according to the invention are now described with the aid of figures 3 and 4; they are based on a different way of feeding the comburent into the feeder channel 3 for the scrap 4; this way takes into account the scientific knowledge related to the propagation of the diffusion flame in a stream of combustible substances.

The components of the devices of figures 3 and 4 that are identical or functionally correspond to those of the solution shown in figures 1 and 2 are designated by the same reference numerals and are not described further in detail here.

The basic difference between the Consteel solution of the prior art and the solution according to the present invention is the elimination of the injection nozzles 9 arranged along the entire length of the feeder channel 3.

In the solutions according to the invention, there are also injection nozzles 11 (only one is shown in figure 3, but they are generally several, as described hereinafter), but they are located so that they are in practice clustered in a single section of the feeder channel 3 that is arranged near the end 6 of the channel 3 that leads into the furnace 1. The characteristic of these injection nozzles is that they are made and located so as to act on the propagation of the flame along the feeder channel 3 for the scrap 4. The number of nozzles 11, their placement in the channel 3, and their air discharge direction, as well as the force and shape of their jet, are in other words chosen inventively as a function of the propagation of the flame in the channel 3, with the explicit purpose of achieving the formation of a flame along the entire useful length (defined earlier) of the feeder channel 3.

According to the method according to the invention, propagation of the flame along the feeder channel 3 for the scrap 4 is also provided in two different steps, which are:
a) the stabilization of the turbulent flame at the beginning of the feeder channel, and
b) the propagation of the flame toward the exhaust gas outlet of the feeder channel.

In other words, the method entails solving the problem to which the invention relates, i.e., ensuring the formation of a flame along the channel 3 from its beginning, near the furnace 1, up to the point where the exhaust gases leave the channel 3 to enter the exhaust gas aspirator duct 8, by virtue of two separate provisions, i.e., one aimed at stabilizing the flame at the beginning of the channel 3, preventing it from escaping toward the exhaust gas aspirator duct 8 as a consequence of its excessively slow propagation. By means of this provision, one therefore seeks to improve the flame propagation conditions, i.e., increase the turbulence of the stream of exhaust gases. With the second provision, one furthermore seeks to propagate the flame along the channel, i.e., distribute it along the length of the channel so that it can cover the entire useful length of said channel.

From the point of view of the device, the method is provided, in a device according to claim 1 and corresponding, in its structure, to the conventional device of EP-C-0190313 and to the conventional plant described in the introduction, by virtue of the fact of providing combustion air feeder nozzles 11 (injection nozzles) located in the channel 3 near the melting furnace 1, where said nozzles also direct their controlled jet of air so as to increase the rate at which the flame propagates along the feeder channel 3 for the scrap 4.

Generally speaking, the method and the corresponding device according to the inveniton therefore teach to arrange the air feeder nozzles 11 in the channel 3, and more specifically to cluster them in the vicinity of the melting furnace 1: this teaching is highly innovative with respect to what is known in the prior art, according to which the nozzles 9 were to be distributed along the entire useful portion of the channel 3. Of course, the position and all the other characteristics of the nozzles 11 must be determined with appropriate tests and experiments.

With respect to this first general teaching, the method of claim 3 and the device described in claim 1, constitute an explicit specification of one of the means for achieving the desired inventive result: namely, to divide the task of the feeder nozzles 11 into two separate sub-tasks, i.e., to keep the flame in place and to propagate it along the channel. The corresponding device according to claim 5 entails, for this purpose, the presence of two kinds of nozzle 11 for feeding the combustion air; more specifically, a type 11' (see figure 4) that directs the jet of combustion air essentially at right angles to the longitudinal direction of the channel 3 for the scrap 4 and therefore of the flow of exhaust gases in the channel 3. This first type of nozzle 11' produces intense turbulence in the exhaust gas stream, and by greatly increasing the propagation rate of the diffusion flame in the exhaust gases, it holds the flame at the point where the nozzles 11' are located, i.e., it "traps" it, to use a rather unscientific term that however clearly visualizes the concept of the effect of the nozzles 11' (which can be different and arranged in a ring).

The second type of feeder nozzle 11" is instead orientated parallel to the longitudinal direction of the channel 3 and directs its air jet parallel to, and in the same direction as, the direction f of the stream of exhaust gases in the feeder channel 3 for the scrap 4.

These feeder nozzles 11" can also be several and can be arranged in the upper part of the channel 3 so as to form a radial pattern of nozzles 11".

It is evident that the effect of the nozzles 11' and 11" can be affected by virtue of some specific provisions (for example, by varying the amount of air that is delivered, or by modifying the outlet shape of the nozzle, etcetera), which must be chosen by means of appropriate tests according to the specific conditions that the method and device must deal with.

According to another preferred preheating method, the feeding of the combustion air is furthermore concentrated in a single point of the feeder channel 3 for the scrap 4 that is located in the vicinity of the melting furnace 1, the temperature of the exhaust gases in points P1, P2, P3,... Pn that are uniformly distributed along the length of the feeder channel 3 is determined, the CO, CO2, and O2 content of the exhaust gases is analyzed at the two ends 5 and 6 of the feeder channel 3, and the supply of the combustion air is allowed to pass, in order to ensure propagation of the flame along the channel 3, by taking into account the values of the temperature T measured in the points P1, ..., Pn, which are distributed along the channel, and the results of the analyses of the CO, CO2, and O2 content performed at the two ends 5 and 6 of the channel 3.

The system for controlling the combustion of the exhaust gases in the channel 3 by measuring the temperatures in points that are uniformly distributed along the channel and by analyzing the CO, CO2, and O2 content of the exhaust gases in the two endpoints of the channel 3 allow to achieve perfectly controlled regulation of the combustion conditions and to very effectively control the feeding of the combustion air to the nozzles 11' and 11", obtaining a channel 3 that is affected by a flame along its entire useful length and therefore provides optimum preheating of the scrap 4 at the outlet 6 of the channel 3.

The device for performing the operating method furthermore arranges the nozzles 11', 11" for feeding the combustion air substantially along the peripheral region in the upper part of the channel 3 that is not occupied by the scrap 4 and is arranged in the vicinity of the outlet of the channel 3 in the melting furnace 1. Temperature sensors are also distributed along the channel 3 at uniform intervals and in the points P1, Furthermore, the exhaust gases are sampled at the two ends 5 and 6 of the feeder channel 3 for the scrap 4, in the points A1 and A2 respectively, and are analyzed in an analyzer that determines their CO, CO2, and O2 content.

Finally, the device has regulator means (not shown, but known to every expert in the field) that control the feeding of the combustion air to the nozzles 11', 11"; said means are controlled by the values of the temperature T that are detected along the channel 3 at the points P1, ..., Pn and by the values of the analyses performed by the CO, CO2, and O2 analyzers. This allows to ensure optimum propagation of the flame in countercurrent along the feeder channel 3 for the scrap 4.

It is furthermore evident that the choice of the type of feeder nozzle 11' or 11" to be activated, or whose effect must be reinforced, is made as a function of the temperature values provided by the thermocouples that are arranged in the points P1, ..., Pn and of the values of the CO, CO2, and O2 analyses. If, for example, there is an excessively high temperature at the beginning of the feeder channel 3, preference will be given to the "parallel" injectors 11", so as to propagate the flame over a longer extent, and vice versa. It is stressed once again that the reaction speed of the type of flame propagation regulation described above is extremely high and allows to quickly and effectively cope with the most extreme situations that occur in the feeder channel 3 as a consequence of quick variations (which are always possible) in the production of exhaust gases in the melting furnace 1.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for performing preheating of the scrap by reheating the exhaust gases that develop in a melting furnace, comprising:
a melting furnace (1), in which the scrap (4) is melted continuously and is supplied continuously with energy, that is converted into heat that is continuously transferred to the scrap (4),
a channel (3) for feeding the scrap (4) into the furnace (1), said channel running from a point (5) for charging the scrap (4) up to the melting furnace (1) and being equipped to continuously feed the scrap (4) to the furnace (1),
a unit for aspirating the exhaust gases of the melting process, which comprises a part of the feeder channel (3) for the scrap (4), an exhaust gas aspirator duct (8) that is connected to said channel (3) in a point that is arranged in the vicinity of the point (5) for charging the scrap (4) into the channel (3), aspirator means that are included in the aspirator duct (8), and dynamic sealing means that are connected to the channel (3) for feeding the scrap (4) in a point that is located between the point where the aspiration duct (8) leads into the channel (3) and the charging point (5) for the scrap (4),
**characterized in that** nozzles (11; 11', 11") for feeding combustion air are clustered and located in the channel (3) in the vicinity of the melting furnace (1), and **in that** said nozzles (11, 11', 11") direct their controlled air jet so as to increase the propagation rate of the flame along the channel (3) for feeding the scrap (4), said combustion air feeder nozzles being of two kinds, a first type (11') that directs the jet of combustion air substantially at right angles to the longitudinal direction of the channel (3) for the scrap (4) and therefore of the stream of exhaust gases in the channel (3), and a second type (11") that is orientated parallel to the longitudinal direction of the channel (3) for the scrap (4) and directs its air jet parallel to, and in the same direction (f) as, the direction of the stream of exhaust gases in the channel (3) for feeding the scrap (4).

2. The device according to claim 1, **characterized in that** the combustion air feeder nozzles (11; 11', 11") are substantially arranged along the peripheral region of a single section of the channel (3), preferably in the upper part of the channel (3) that is not occupied by the scrap (4) and is arranged in the vicinity of the outlet of the feeder channel (3) that leads into the melting furnace (1); **in that** temperature sensors are also distributed along the channel (3), at regular intervals, in the points (P1, ..., Pn) in order to measure the temperature (T) of the exhaust gases; **in that** the exhaust gases are sampled at the two ends (5, 6) of the feeder channel (3) for the scrap (4), in the points (A1 and A2), and is sent to an analyzer that determines its CO, CO2, and O2 content; and **in that** there are regulator means that control the feeding of combustion air to the feeder nozzles (11; 11', 11"), said means being controlled by the values of the temperature (T) detected along the channel (3) for feeding the scrap (4) and by the values of the analyses performed by the CO, CO2, and O2 analyzers, so as to ensure optimum flame propagation, in countercurrent, along the feeder channel (3) for the scrap (4).

3. A method for preheating scrap in a device according to claim 1, by reheating the exhaust gases that develop in a melting furnace, comprising the steps of:
continuously feeding the scrap (4) into the furnace (1) by means of a feeder channel (3) that runs from a charging point (5) for the scrap (4) to the melting furnace (1),
continuously melting the scrap (4) in the melting furnace (1),
continuously preheating the scrap in the feeder channel (3) for the scrap (4) by virtue of the flow of the melting exhaust gases in countercurrent, with respect to the scrap, in said channel (3) along a portion that connects the melting furnace (1) to an exhaust gas aspirator duct (8) that leads into the feeder channel (3) near the charging point (5) for the scrap (4), where preheating subsequently occurs by heat exchange generated by the controlled combustion of the CO and of any other volatile compounds contained in the exhaust gases and by exchange of the sensible heat of the exhaust gases at high temperature with the scrap at a lower temperature,
**characterized in that** in order to control the combustion of the CO and of any other volatile compounds contained in the exhaust gases along the feeder channel, the propagation of the flame along the feeder channel (3) of the scrap (4) is controlled clustering nozzles for feeding the combustion air into the feeder channel only in the vicinity of the melting furnace.

4. The preheating method according to claim 3, **characterized in that** the propagation of the flame along the feeder channel (3) for the scrap (4) is performed in two stages, which are
a) the stabilization of the turbulent flame at the beginning of the feeder channel (3),
b) the propagation of the flame toward the outlet of the exhaust gases from the feeder channel (3).

5. The preheating method according to claim 3, **characterized in that** the feeding of the combustion air is concentrated in a single point of the feeder channel (3) for the scrap (4) that is located near the outlet of the channel that leads into the melting furnace (1); the temperature of the exhaust gases is measured in points (P1, P2, P3, ..., Pn) that are uniformly distributed along the length of the feeder channel (3); the CO, CO2, and O2 content of the exhaust gases is analyzed at the two ends (5, 6) of the feeder channel (3), in the points (A1) and (A2) respectively; and the combustion air, in order to ensure propagation of the flame along the channel (3), is fed by taking into account the values of the temperature (T) measured in the points (P1, ..., Pn) distributed along the channel (3) and the results of the analyses of the CO, CO2, and O2 content performed at the two ends (5, 6) of the channel (3).

## Patentansprüche

1. Vorrichtung zum Vorwärmen des Schrotts durch Wiedererwärmen der sich in einem Schmelzofen entwickelnden Abgase, mit:
einem Schmelzofen (1), in dem der Schrott (4) kontinuierlich geschmolzen und dem kontinuierlich Energie zugeführt wird, die in Wärme umgewandelt wird, welche kontinuierlich auf den Schrott (4) übertragen wird,
einem Kanal (3) zum Zuführen des Schrotts (4) in den Ofen (1), wobei der Kanal von einer Stelle (5) zum Beschicken mit Schrott (4) bis zu dem Schmelzofen (1) verläuft und so ausgestattet ist, daß er dem Ofen (1) den Schrott (4) kontinuierlich zuführt,
einer Einheit zum Ansaugen der Abgase aus dem Schmelzvorgang, die umfaßt: einen Teil des Zuführkanals (3) für den Schrott (4), einen Abgasansaugkanal (8), der an einer Stelle in der Nähe der Stelle (5) zum Beschicken des Kanals (3) mit Schrott (4) mit dem Kanal (3) verbunden ist, in dem Ansaugkanal (8) enthaltene Ansaugmittel sowie dynamische Dichtungsmittel, die an einer Stelle zwischen der Stelle, an der der Ansaugkanal (8) in den Kanal (3) führt, und der Beschickungsstelle (5) für den Schrott (4) mit dem Kanal (3) zum Zuführen des Schrotts (4) verbunden sind,
**dadurch gekennzeichnet, daß** Düsen (11; 11', 11") zum Zuführen von Verbrennungsluft gruppiert und in dem Kanal (3) in der Nähe des Schmelzofens (1) angeordnet sind, und daß die Düsen (11, 11', 11") ihren geregelten Luftstrahl so ausrichten, daß die Ausbreitungsgeschwindigkeit der Flamme entlang dem Kanal (3) zum Zuführen des Schrotts (4) erhöht wird, wobei die Düsen zum Zuführen von Verbrennungsluft zwei Arten von Düsen sind, nämlich eine erst Art (11'), die den Strahl Verbrennungsluft im wesentlichen senkrecht zur Längsrichtung des Kanals (3) für den Schrott (4) und damit zur Strömung der Abgase in dem Kanal (3) abgibt, und eine zweite Art (11"), die parallel zur Längsrichtung des Kanals (3) für den Schrott (4) ausgerichtet ist und ihren Luftstrahl parallel zur Strömungsrichtung der Abgase in dem Kanal (3) zum Zuführen des Schrotts (4) und in der gleichen Richtung (f) wie diese abgibt.

2. Vorrichtung nach Anspruch 1, **dadurch gekennzeichnet, daß** die Düsen (11; 11', 11") zum Zuführen von Verbrennungsluft im wesentlichen entlang dem Umfangsbereich eines einzigen Abschnitts des Kanals (3) angeordnet sind, vorzugsweise im oberen Teil des Kanals (3), der nicht von dem Schrott (4) besetzt ist und in der Nähe des Ausgangs des Zuführkanals (3) liegt, der in den Schmelzofen (1) führt; daß Temperaturfühler in regelmäßigen Abständen an den Stellen (P1, ..., Pn) ebenfalls entlang dem Kanal (3) verteilt sind, um die Temperatur (T) der Abgase zu messen; daß an den beiden Enden (5, 6) des Zuführkanals (3) für den Schrott (4) an den Stellen (A1 und A2) jeweils eine Probe der Abgase genommen und an ein Analysegerät geschickt werden, das ihren CO-, CO2- und O2-Gehalt bestimmt; und daß Reglermittel vorhanden sind, die die Zufuhr von Verbrennungsluft zu den Zuführdüsen (11; 11', 11") steuern, wobei die Mittel durch die entlang dem Kanal (3) zum Zuführen des Schrotts (4) erfaßten Werte der Temperatur (T) und durch die Werte aus den durch die CO-, CO2- und O2-Analysegeräte durchgeführten Analysen derart gesteuert werden, daß eine optimale Flammenausbreitung, entgegen der Strömungsrichtung, entlang dem Zuführkanal (3) für den Schrott (4) sichergestellt wird.

3. Verfahren zum Vorwärmen von Schrott bei einer Vorrichtung nach Anspruch 1 durch Wiedererwärmen der sich in einem Schmelzofen entwickelnden Abgase, mit den folgenden Schritten:
kontinuierliches Zuführen des Schrotts (4) in den Ofen (1) mittels eines Zuführkanals (3), der von einer Beschickungsstelle (5) für den Schrott (4) zu dem Schmelzofen (1) verläuft,
kontinuierliches Schmelzen des Schrotts (4) in dem Schmelzofen (1),
kontinuierliches Vorwärmen des Schrotts in dem Zuführkanal (3) für den Schrott (4) durch die Strömung der Schmelzabgase gegen die Strömungsrichtung des Schrotts in dem Kanal (3) entlang einem Abschnitt, der den Schmelzofen (1) mit einem Abgasansaugkanal (8) verbindet, der in der Nähe der Beschickungsstelle (5) für den Schrott (4) in den Zuführkanal (3) führt, wo dann das Vorwärmen durch Wärmeaustausch erfolgt, erzeugt durch die kontrollierte Verbrennung des CO und anderer flüchtiger Verbindungen in den Abgasen und durch Austausch der fühlbaren Wärme der Abgase mit hoher Temperatur mit dem Schrott mit einer niedrigeren Temperatur,
**dadurch gekennzeichnet, daß** zum Steuern der Verbrennung des CO und anderer in den Abgasen enthaltener flüchtiger Verbindungen entlang dem Zuführkanal die Ausbreitung der Flamme entlang dem Zuführkanal (3) des Schrotts (4) gesteuert wird, indem Düsen zum Zuführen der Verbrennungsluft in den Zuführkanal nur in der Nähe des Schmelzofens gruppiert werden.

4. Vorwärmverfahren nach Anspruch 3, **dadurch gekennzeichnet, daß** die Ausbreitung der Flamme entlang dem Zuführkanal (3) für den Schrott (4) in zwei Schritten erfolgt, nämlich
a) Stabilisierung der turbulenten Flamme am Anfang des Zuführkanals (3),
b) Ausbreitung der Flamme in Richtung zu dem Ausgang der Abgase aus dem Zuführkanal (3).

5. Vorwärmverfahren nach Anspruch 3, **dadurch gekennzeichnet, daß** das Zuführen der Verbrennungsluft an einer einzigen Stelle des Zuführkanals (3) für den Schrott (4) konzentriert ist, die in der Nähe des Ausgangs des Kanals liegt, der in den Schmelzofen (1) führt; die Temperatur der Abgase an Stellen (P1, P2, P3, ..., Pn) gemessen wird, die gleichmäßig über die Länge des Zuführkanals (3) verteilt sind; der CO-, CO2 und O2-Gehalt der Abgase an den beiden Enden (5, 6) des Zuführkanals (3) an den Stellen (A1) bzw. (A2) analysiert wird; und die Verbrennungsluft, um die Ausbreitung der Flamme entlang dem Kanal (3) sicherzustellen, unter Berücksichtigung der Werte der an den über den Kanal (3) verteilten Stellen (P1, ..., Pn) gemessenen Temperatur (T) und der Ergebnisse der an den beiden Enden (5, 6) des Kanals (3) durchgeführten Analysen des CO-, CO2- und O2-Gehalts zugeführt wird.

## Revendications

1. Dispositif pour réaliser le préchauffage de déchets par le réchauffement des gaz d'échappement qui se développent dans un four de fusion, comprenant :
un four de fusion (1), dans lequel les déchets (4) sont fondus de façon continue et sont alimentés de façon continue en énergie, qui est convertie en chaleur qui est transférée de façon continue aux déchets (4),
un canal (3) pour introduire les déchets (4) dans le four (1), ledit canal s'étendant d'un point (5) pour charger les déchets (4) jusqu'au four de fusion (1) et étant équipé pour amener de façon continue les déchets (4) au four (1),
une unité pour aspirer les gaz d'échappement du processus de fusion, qui comprend une partie du canal d'introduction (3) pour les déchets (4), un conduit d'aspiration des gaz d'échappement (8) qui est relié audit canal (3) en un point qui est agencé à proximité du point (5) pour charger les déchets (4) dans le canal (3), des moyens d'aspiration qui sont inclus dans le conduit d'aspiration (8), et des moyens d'étanchéité dynamique qui sont reliés au canal (3) pour amener les déchets (4) en un point qui est situé entre le point où le conduit d'aspiration (8) mène dans le canal (3) et le point de chargement (5) pour les déchets (4),
**caractérisé en ce que** des buses (11 ; 11', 11") pour amener de l'air de combustion sont groupées et situées dans le canal (3) à proximité du four de fusion (1), et **en ce que** lesdites buses (11 ; 11', 11") dirigent leur jet d'air contrôlé de façon à augmenter la vitesse de propagation de la flamme le long du canal (3) d'introduction des déchets (4), lesdites buses d'alimentation en air de combustion étant de deux sortes, un premier type (11') qui dirige le jet d'air de combustion sensiblement à angle droit par rapport à la direction longitudinale du canal (3) pour les déchets (4) et donc du courant des gaz d'échappement dans le canal (3), et un second type (11") qui est orienté parallèlement à la direction longitudinale du canal (3) pour les déchets (4) et dirige son jet d'air parallèlement à, et dans la même direction (f) que, la direction du courant des gaz d'échappement dans le canal (3) d'introduction des déchets (4).

2. Dispositif selon la revendication 1,
**caractérisé en ce que** les buses d'alimentation en air de combustion (11 ; 11', 11") sont sensiblement agencées le long de la région périphérique d'une section unique du canal (3), de préférence dans la partie supérieure du canal (3) qui n'est pas occupée par les déchets (4) et est agencée à proximité de la sortie du canal d'introduction (3) qui mène dans le four de fusion (1) ; **en ce que** des capteurs de température sont également répartis le long du canal (3), à des intervalles réguliers, en des points (P1, ...., Pn) de façon à mesurer la température (T) des gaz d'échappement ; **en ce que** les gaz d'échappement sont prélevés au niveau des deux extrémités (5, 6) du canal d'introduction (3) des déchets (4), en des points (A1 et A2), et sont envoyés à un analyseur qui détermine sa teneur en CO, CO₂ et O₂ ; et **en ce que** sont prévus des moyens de régulation qui commandent l'alimentation d'air de combustion aux buses d'alimentation (11 ; 11', 11"), lesdits moyens étant commandés par les valeurs de la température (T) détectées le long du canal (3) d'introduction des déchets (4) et par les valeurs des analyses réalisées par les analyseurs de CO, CO₂ et O₂, de façon à assurer une propagation de flamme optimale, à contre-courant, le long du canal d'introduction (3) des déchets (4).

3. Procédé pour préchauffer des déchets dans un dispositif selon la revendication 1, par le réchauffement des gaz d'échappement qui se développent dans un four de fusion, comprenant les étapes de :
introduire de façon continue les déchets (4) dans le four (1) par l'intermédiaire d'un canal d'introduction (3) qui s'étend d'un point de chargement (5) pour les déchets (4) au four de fusion (1),
mettre en fusion de façon continue les déchets (4) dans le four de fusion (1),
préchauffer de façon continue les déchets dans le canal d'introduction (3) pour les déchets (4) grâce au flux des gaz d'échappement de fusion à contre-courant, par rapport aux déchets, dans ledit canal (3) le long d'une partie qui relie le four de fusion (1) à un conduit d'aspiration des gaz d'échappement (8) qui mène dans le canal d'introduction (3) près du point de chargement (5) pour les déchets (4), où le préchauffage se produit de façon subséquente par échange thermique engendré par la combustion commandée du CO et de tout autre composé volatil contenu dans les gaz d'échappement et par échange de la chaleur sensible des gaz d'échappement à température élevée avec les déchets à une température inférieure,
**caractérisé en ce que**, pour commander la combustion du CO et de tout autre composé volatil contenu dans les gaz d'échappement le long du canal d'introduction, la propagation de la flamme le long du canal d'introduction (3) des déchets (4) est commandée en groupant des buses pour amener de l'air de combustion dans le canal d'introduction seulement à proximité du four de fusion.

4. Procédé de préchauffage selon la revendication 3,
**caractérisé en ce que** la propagation de la flamme le long du canal d'introduction (3) des déchets (4) est réalisée en deux étapes, qui sont :
(a) la stabilisation de la flamme turbulente au début du canal d'introduction (3),
(b) la propagation de la flamme vers la sortie des gaz d'échappement du canal d'introduction (3).

5. Procédé de préchauffage selon la revendication 3,
**caractérisé en ce que** l'alimentation de l'air de combustion est concentrée en un point unique du canal d'introduction (3) des déchets (4), qui est situé près de la sortie du canal qui mène dans le four de fusion (1) ; la température des gaz d'échappement est mesurée en des points (P1, P2, P3, ....., Pn) qui sont uniformément répartis le long de la longueur du canal d'introduction (3) ; la teneur en CO, CO₂ et O₂ des gaz d'échappement est analysée aux deux extrémités (5, 6) du canal d'introduction (3), en des points (A1) et (A2) ; et l'air de combustion, de façon à assurer la propagation de la flamme le long du canal (3), est fourni en prenant en compte les valeurs de la température (T) mesurée aux points (P1 ...., Pn) répartis le long du canal (3) et les résultats des analyses de la teneur en CO, CO₂ et O₂ réalisées aux deux extrémités (5, 6) du canal (3).
